# EUROPEAN PATENT APPLICATION

(11) **EP 1 229 225 A2**
(43) Date of publication of application: **07.08.2002**
(21) Application number: 02250602.6
(22) Date of filing: 29.01.2002
(51) Int. Cl.: F02B 43/10, F02B 63/04

(54) **Hydrogen engine, power drive system and vehicle driven thereby**

(30) Priority: 02.02.2001 JP 2001065729
(71) Applicant: Hatanaka, Takefumi, Tokyo 193-0836 (JP)
(72) Inventor: Hatanaka, Takefumi, Tokyo 193-0836 (JP)
(74) Representative: Lyndon-Stanford, Edward Willoughby Brooke

(57) **Abstract**

A hydrogen engine (10), a power drive system (12) and a vehicle (14) are disclosed as including a compressed air supply section (24), a water supply section (15), a water/fuel converter (16), a combustor (18), and an expander (20). The water/fuel converter (16) includes an arc plasma reactor (76) having arc discharge electrodes (88, 90, 92) and a minute arc generating section (86) composed of a plurality of solid carbon electrode-elements (98) located between the arc discharge electrodes to convert water into hydrogen rich gas under the presence of arc plasmas in a plurality of minute arc plasma passages (100) formed in the carbon electrodes. The power drive system includes an electric power generator (GE) which produces AC power output, a rectifier (44) for converting the AC power output to DC power output and an electric power storage unit (46) which stores the DC power output and which is connected to an arc plasma power supply (28) connected to the water/fuel converter. The vehicle includes a propulsion system (52, 56) driven with the power drive system.

## Description

### BACKGROUND OF THE INVENTION

### 1. Field of the Invention

This invention relates to hydrogen engines, drive power systems and vehicles and more particularly to a hydrogen engine, a power drive system and a vehicle employing such hydrogen engine.

### 2. Description of the Related Art

Extensive research and development works have been undertaken to produce hydrogen engines and power drive systems employing the same.

U.S. Patent No. 5177952 discloses a power drive system employing a hydrogen engine. This system features the provision of an electrolyte apparatus which decomposes water into hydrogen and oxygen. During electrolytic operation of the apparatus, large amounts of gas bubbles of hydrogen and oxygen adhere to respective electrode surfaces, with a resultant remarkable degradation in contact between water and the electrodes surfaces for thereby providing degraded hydrogen production efficiency.

U.S. Patent No. 5143025 discloses a closed cycle power drive system using hydrogen and oxygen as fuels. This system concerns an electrolyte apparatus having a plurality of electrodes plates. This structure has the same drawbacks discussed above.

U.S. Patent No. 5690902 also discloses a closed cycle engine system employing a reactor bed filled with iron catalysts which is brought into contact with water to produce hydrogen that is used for operating a heat engine to propel an automotive vehicle. In this system, the iron catalysts tend to be oxidized to become non-active in an extremely short period to cease water-decomposing reaction. Thus, this system requires a grinding apparatus for grinding non-active surfaces of the iron catalysts. Even with such assisting device, hydrogen production efficiency can not be improved, with a resultant complicated structure of the electrolyte apparatus and a complicated control system.

### SUMMARY OF THE INVENTION

It is therefore an object of the present invention to provide a hydrogen engine, a power drive system and a vehicle driven thereby which solve various drawback encountered in prior arts and which are simple in construction, reliable in operation and remarkably high in operating performance.

According to one aspect of the present invention, there is provided a hydrogen engine comprising: a compressed air supply section; a water supply section; a water/fuel converter for converting water into hydrogen rich gas and including an arc reactor chamber having an upstream side formed with a water inlet connected to the water supply section and a downstream side formed with at least one fuel injection nozzle, arc discharge electrodes disposed in the reactor chamber and a plurality of solid carbon electrode-elements located between the arc electrodes to form a large number of minute arc plasma passages among the solid carbon electrode-elements to allow a plurality of arc plasmas to be created therein; an arc discharge power supply for supplying arc discharge electric power to the arc electrodes; a combustor communicating with the fuel injection nozzle and the compressed air supply section for combusting a mixture of compressed air and the hydrogen rich gas to produce motive gas; and an expander responsive to the motive gas to produce a mechanical output; wherein water supplied at the upstream side of the arc reactor chamber is initially converted into steam and the steam then flows through the minute arc plasma passages to react with the plurality of solid carbon electrode bodies under the presence of arc plasmas to produce the hydrogen rich gas containing hydrogen, carbon monoxide and carbon dioxide.

According to another aspect of the present invention, there is provided a power drive system comprising: a hydrogen engine including a compressed air supply section, a water supply section, a water/fuel converter for converting water into hydrogen rich gas and including an arc reactor chamber having an upstream side formed with a water inlet connected to the water supply section and a downstream side formed with at least one fuel injection nozzle, arc discharge electrodes disposed in the reactor chamber and a plurality of solid carbon electrode-elements located between the arc electrodes to form a large number of minute arc plasma passages among the solid carbon electrode-elements to allow a plurality of arc plasmas to be created therein, an arc discharge power supply for supplying arc discharge electric power to the arc electrodes, a combustor communicating with the fuel injection nozzle and the compressed air supply section for combusting a mixture of compressed air and the hydrogen rich gas to produce motive gas, and an expander responsive to the motive gas to produce a mechanical output, wherein water supplied at the upstream side of the arc reactor chamber is initially converted into steam and the steam then flows through the minute arc plasma passages to react with the plurality of solid carbon electrode bodies under the presence of arc plasmas to produce the hydrogen rich gas containing hydrogen, carbon monoxide and carbon dioxide; an alternating current electric power generator driven with the expander to produce AC power output; a rectifier for converting the AC power output into a DC power output; and an electric power storage unit for storing the DC power output; wherein the arc discharge power supply is connected to the electric power storage unit to receive electric power therefrom.

According to another aspect of the present invention, there is provided a vehicle comprising: a vehicle body; a power drive system mounted in the vehicle body; and a propulsion system driven with the power drive system to propel the vehicle body; wherein the power drive system includes a hydrogen engine which includes: a compressed air supply section, a water supply section, a water/fuel converter for converting water into hydrogen rich gas and including an arc reactor chamber having an upstream side formed with a water inlet connected to the water supply section and a downstream side formed with at least one fuel injection nozzle, arc discharge electrodes disposed in the reactor chamber and a plurality of solid carbon electrode-elements located between the arc electrodes to form a large number of minute arc plasma passages among the solid carbon electrode-elements to allow a plurality of arc plasmas to be created therein, an arc discharge power supply for supplying arc discharge electric power to the arc electrodes, a combustor communicating with the fuel injection nozzle and the compressed air supply section for combusting a mixture of compressed air and the hydrogen rich gas to produce motive gas, and an expander responsive to the motive gas to produce a mechanical output to drive the propulsion system, wherein water supplied at the upstream side of the arc reactor chamber is initially converted into steam and the steam then flows through the minute arc plasma passages to react with the plurality of solid carbon electrode bodies under the presence of arc plasmas to produce the hydrogen rich gas containing hydrogen, carbon monoxide and carbon dioxide.

### BRIEF DESCRIPTION OF THE DRAWINGS

The invention, together with objects and advantages thereof, may best be understood by reference to the following description of the presently preferred embodiments together with the accompanying drawings, in which:
FIG. 1 is a schematic view of a hybrid vehicle employing a drive system composed of a hydrogen engine of a preferred embodiment according to the present invention;
FIG. 2 is a partial cross sectional view of the hydrogen engine shown in FIG. 1;
FIG. 3 is a cross sectional view taken on line III-III of FIG. 2;
FIG. 4 is a cross sectional view taken on line IV-IV of FIG. 2;
FIG. 5 is a view illustrating the relationship between a stator of a turbine and a turbine rotor of the hydrogen engine shown in FIG. 2; and
FIG 6 is a view illustrating the relationship between a stator of a compressor and a turbine rotor of the hydrogen engine shown in FIG. 2.

### DETAILED DESCRIPTION OF THE PREFERRED EMBODIMENTS

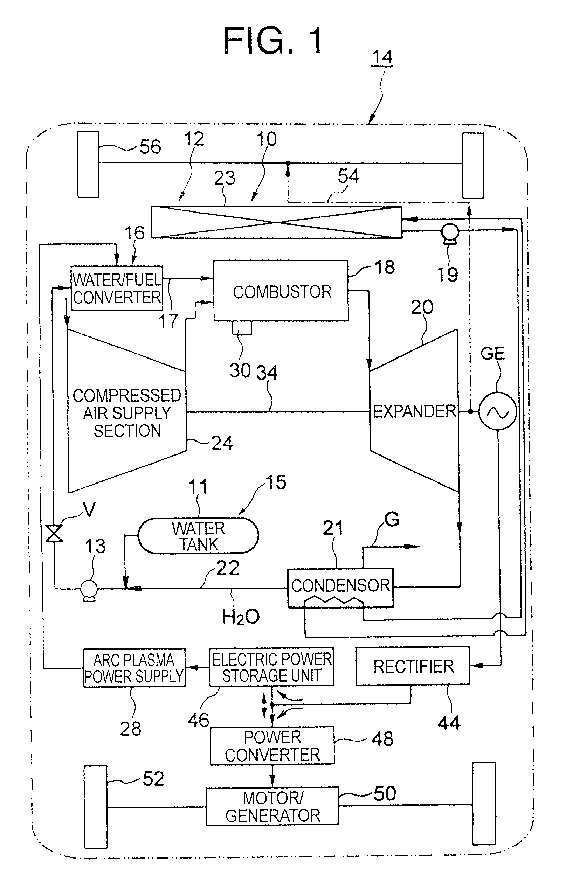

Referring to the drawings, FIG. 1 shows a block diagram of a hybrid vehicle 14 employing a power drive system 12 of a hydrogen engine 10 of a preferred embodiment according to the present invention. The hydrogen engine 10 includes a water supply section 15 composed of a water tank 11 and a water supply pump 13, a one-way valve V for preventing reversed flow of high pressure gas, a water/fuel converter 16 for converting water into hydrogen rich gas, a combustion section 18 which produce motive gas by combusting compressed air and hydrogen rich gas, an expander 20 for expanding motive gas to thereby produce a mechanical output, a condenser 21 for condensing expanded gas to obtain condensed water, a recycle line 22 for recycling condensed water to the water/fuel converter 16 via the water supply pump 13, a circulation pump 19 for circulating coolant between the condenser 21 and a radiator 23 which is located in front of the vehicle 14 to cool the coolant, and an air compressor section 24 composed of a compressor connected to the expander 20 to supply compressed air to the combustion section 18. Though not shown, a desired proportion of exhaust gas G, which contains a slight amount of carbon dioxides, may be recirculated to an inlet of the compressor section 24 or to the water/fuel converter 16.

It is to be noted that, in case of the vehicle composed of a watercraft, the recycle line 22 may be dispensed with and the water pump 13 of the water supply section 15 may have an inlet located at a hull of the watercraft to directly intake water on which the watercraft is propelled.

The expander 20 may be comprised of a turbine, reciprocating engine, Wankel engine or a rotary engine known in the art. The water supply pump 13 continuously or intermittently supplies water under pressure from the water tank 11 to the water/fuel converter 16 via the one-way valve V. The water in the water tank 11 may preferably contain a slight amount of ionizing agent such as NaOH or KOH to provide electric conductivity.

An alternating electric current power generator GE is coupled to an output shaft 34 of the expander 20 to produce an alternating electric power output. The alternating electric power output is converted to a DC power output by a rectifier 44 to be charged into an electric power storage unit 46 such as a battery, a capacitor bank or in combination thereof. Connected to a junction between the rectifier and the battery 46 via a power converter 48 is a motor/generator 50 to which rear wheels 52 are drivably connected via a differential (not shown). The power converter 48 is comprised of a known inverter/converter which is switched over in function according to running conditions of the vehicle. That is, in the inverter mode, the power converter 48 converts the D/C outputs of the electric power storage unit 46 or the rectifier 44 into an AC power output to drive the motor/vehicle 50 for propelling the rear wheels 52. During deceleration of the vehicle, the power converter 48 is switched over into the converter mode and the motor/generator 50 is switched over into the electric power generator mode such that a decelerating energy is converted into a regenerative power. The regenerative power is converted into a DC power output by the power converter 48 and charged into the electric power storage unit 46. Further, during an accelerating condition of the vehicle 14, the motor/generator 50 is supplied with both the power outputs from the electric power storage unit 46 and the rectifier 44 to increase the motive power output.

An arc plasma power supply 28 is supplied with the DC power output from the electric power storage unit 46 and includes an alternating current three-phase inverter to converts the DC input into an alternating current AC power output, of an output voltage in a range from 30 to 240 voltages at an output frequency in a range from 10 to 60 Hz, which is supplied to the water/fuel converter 16. The combustion section has an ignition plug 30.

It is to be noted that the output shaft 34 of the expander 20 may also be connected to a propulsion unit 56 by means of a suitable automatic transmission and a torque splitting mechanism.

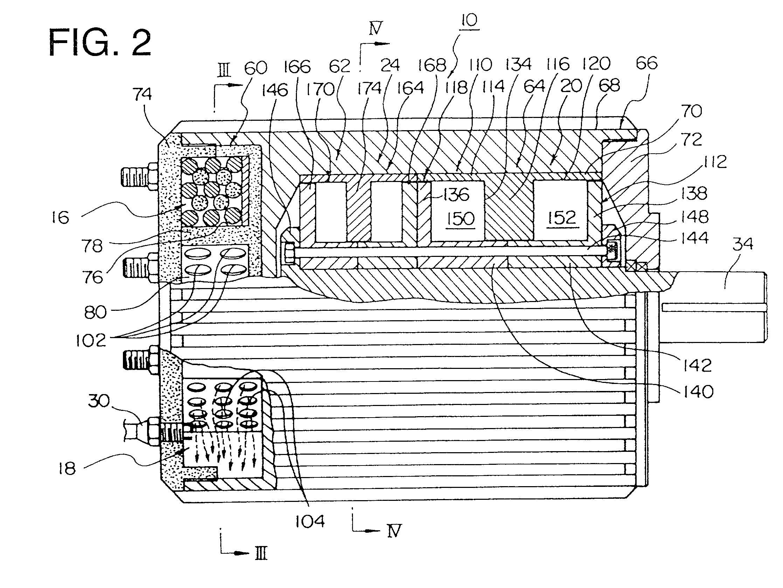

FIGS. 2 to 5 shows the hydrogen engine 10 in a detailed structure. The hydrogen engine 10 has a turbine housing 66 including first to third zones 60, 62, 64. The turbine housing 66 includes an outer case 70, a front end plate 72, an insulating rear end plate 74. The first zone 60 accommodates therein the water/fuel converter 16 which includes a plasma reactor, and the combustion section 18 composed of the combustor. The second zone 62 accommodates therein the compressor section 24 composed of the compressor, and the third zone accommodates therein the expander 20 composed of the turbine.

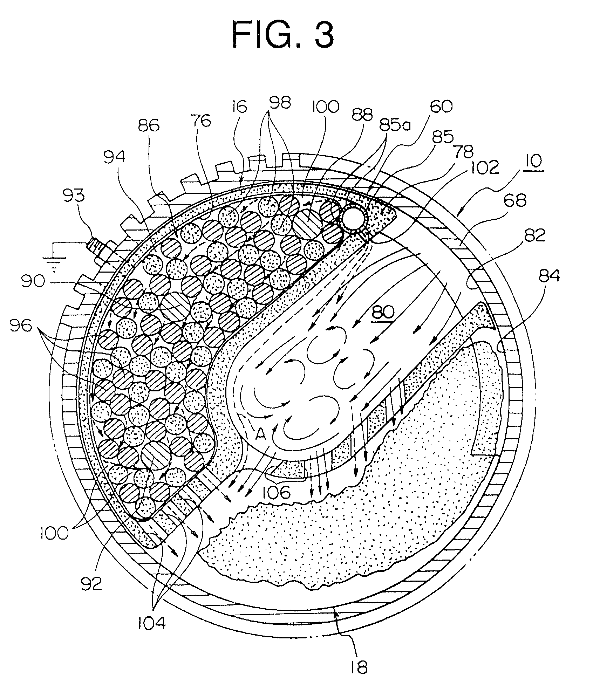

As seen from FIGS. 2 and 3, the first zone 60 receives therein an insulating casing 78 having the water/fuel converter 16 which includes a plasma reactor that has an arch-like plasma reaction chamber 76, and the combustion section 18 which includes an arch-like combustor. The insulating casing 78 also has an intermediate air preheater chamber 80 defined between the plasma reaction chamber 76 and the combustor 78. The first zone 60 has a compressed air passage 82 axially extending between the outer case 68 and the inner case 70 and communicating with the compressor 24. The combustor 18 is formed at an area in close proximity to the air preheater chamber 80 and the plasma reaction chamber 76 and has a jet stream passage 84 opening to a downstream side of the combustor 18 and axially extending between the outer case 68 and the inner case 70 to supply a jet stream of motive gas to the expansion turbine 20.

The plasma reactor 16 has a water injection nozzle 85, located in the vicinity of the compressed air passage 82 at an upstream side of the reaction camber 76, to inject water to the upstream side of the reaction chamber 76. To this end, the water injection nozzle 85 has a plurality of injection ports 85a oriented toward a periphery of the reaction chamber 76 and a central area of the reaction chamber 76 to supply a plurality of streams of water into the reaction camber 76. Also, the plasma reaction chamber 76 includes a minute arc plasma generating section 86. The minute arc plasma generating section 86 includes circumferentially equidistantly spaced multi-phase arc electrodes 88, 90, 92 disposed in the reaction chamber 76, and an arch-like neutral electrode 94 located at a bottom wall of the reaction chamber 76 in opposition to the arc electrodes 88, 90, 92 and connected to a neutral pint of the three-phase power supply or to the ground, with the arc electrodes being supplied with a three-phase alternating electric power from the arc plasma power supply 28 (see FIG. 2).

The minute arc plasma generating section 86 includes a mixture of carbon balls 96, which serves as solid carbon electrode-elements, and insulating balls 98, or may totally includes a plurality of carbon balls. Each of the carbon balls and the insulating balls has a diameter of 3 to 30 mm. A mixture ratio between the carbon balls and the insulating balls is selected in a range from 1 : 1.5 to 1.5 : 1. A plurality of minute arc passages 100 are formed in extended large areas among the carbon balls 96 and the insulating balls 98 to create a large number of minute discharge arcs in the large areas in the reactor chamber 76. When the plurality of streams of water are injected at the upstream of the reactor chamber 76 in the plural directions, these streams of water are exposed to a high temperature due to the discharge arc plasmas and instantly converted into steam. When this occurs, steam passes through he minute arc passages 100 and reacts with the carbon balls 96 in the presence of the discharge arc plasmas that occur due to sparks, thereby producing fuel composed of hydrogen rich gas containing hydrogen, carbon monoxide, carbon dioxide and oxygen. A portion of the carbon dioxide further reacts with steam to perform a water-shift operation to be converted to a hydrogen rich gas.

As now apparent from FIG. 3, a downstream side of the reactor chamber 76 has a plurality of fuel injection nozzles 104 which open to an upstream side of the combustor 18. The insulating casing 78 also has a water injection port 102 communicating with the water injection nozzle 85 to allow water to be injected into the preheater chamber 80 to be admixed with compressed air delivered from the compressed air passage 82. Further, the insulating casing 78 has a lower wall formed with a plurality of injection ports 106 opening to the combustor 18 to supply a mixture of compressed air and water. Air/fuel mixture supplied to the combustor 18 is ignited with the ignition plug 30 (see FIG. 1) to form a high temperature and high pressure motive gas involving steam converted from injected water. The motive gas is then supplied to the expansion turbine 20 through the jet stream passage 84 to drive the turbine 20.

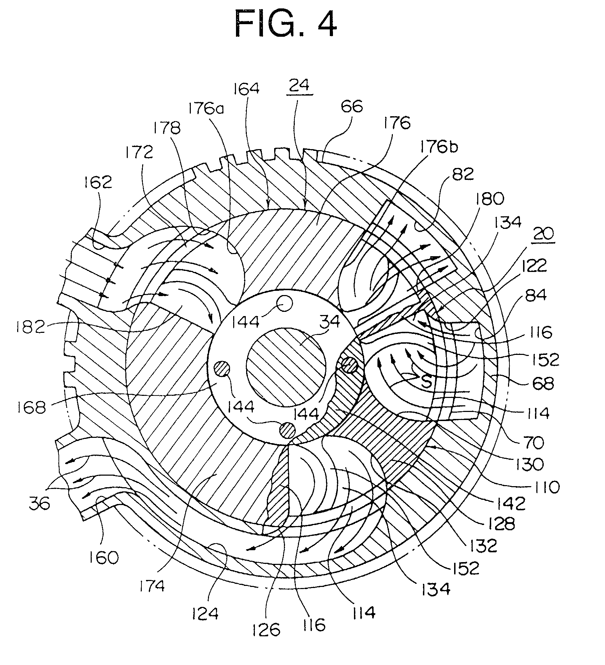

In FIGS. 2 and 4, the expansion turbine 20 includes an annular stator 110 fixedly retained in the inner casing 70, an a turbine rotor 112 rotationally disposed in the annular stator 110. The stator 110 includes an annular stator ring 114 and a circular arc stator blade 116. The turbine rotor 112 includes first and second rotor discs 118, 120. As apparent from FIG. 4, the stator 110 includes a jet nozzle 122 communicating with the jet stream passage 84, and an outlet 126 communicating with an exhaust chamber 124 formed between and the outer casing and the inner casing 70. Located between the jet nozzle 122 and the outlet 126 is a partition member 128 which radially extends inward from the stator ring 114 and includes a jet stream guide surface 130 and an exhaust gas guide surface 132.

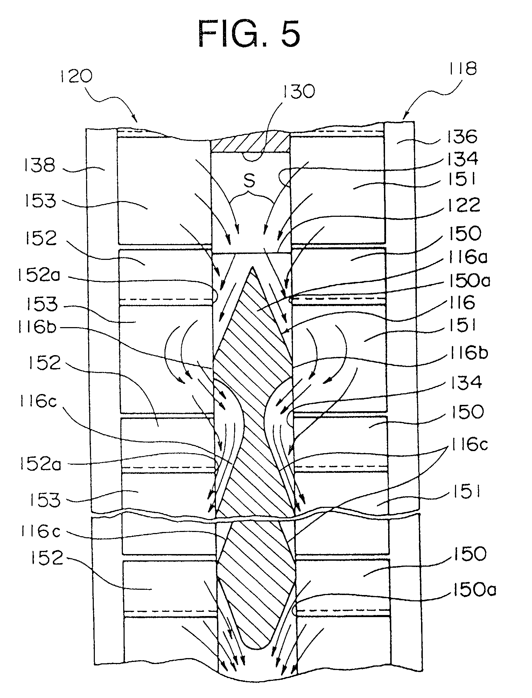

In FIGS. 2 and 4, the turbine rotor 112 has an annular jet passage 134 which is defined between the first and second rotor discs 118, 120 and communicates with the jet nozzle 122 and the outlet 126, with the circular arc stator blade 116 and the partition member 128 being disposed in the annular jet passage 134. As apparent from FIG. 5, the stator blade 116 includes a wedge shape deflection guide 116a for diverging the jet stream S into two stream components which are directed toward the first and second rotor discs 118, 120, a plurality of blade opening valve portions 116b, and a plurality of auxiliary deflection guides 116c. The blade opening valve portions 116b serves to periodically shut off the jet stream passage 84 to cause the jet streams of motive gas to be impact upon the first and second rotor discs 118, 120 to thereby increase output torque.

The first and second rotor discs 118, 120 have flyhwheel discs 136, 138, respectively. The flywheel discs 136, 138 have axially extending cylindrical base portions 140, 142 which support the output shaft 34 and are fixed to one another by a plurality of fixture bolts 144. Each bolt 144 extends through a flange 146 of the output shaft 34, and a retainer flange 148 to fixedly retain the compressor 24 and the turbine 20 in place.

As seen in FIGS. 2, 4 and 5, the fly wheel discs 136, 138 include a plurality of circumferentially equidistantly spaced circular arc shape turbine blades 150, 152. The turbine blades 150, 152 have arch-shaped blade surfaces, arch-shaped rear surfaces and valves surfaces 150a, 152a which are circumferentially equidistantly spaced to be associated with the blade opening valve portions, respectively. The jet streams of gas impinge upon the turbine blades to drive the same and are expelled from the outlet 126 to the exhaust chamber 124, with the expanded gas being delivered through the exhaust port 160 to the condenser 21 shown in FIG. 1. When this takes place, the expanded gas is separated into condensed water and carbon dioxides, with the condensed water being recycled through the recycle line 22 while the carbon dioxides are expelled to the atmosphere. The carbon dioxides may be recycled to the water/fuel converter 16 for the water shift reaction.

In FIGS. 2, 4 and 6, the compressor 24 includes a stator 164 press fitted in the inner casing 70 in a concentric relationship with the stator 100, and a rotor 170 composed of a pair of rotor discs 166, 168 rotatably disposed in the stator 164. The stator 164 includes an annular stator ring 172, a circular arc shape stator guide 174 which extends radially inward, and a partition member 176. The stator 164 has an intake port 178 formed adjacent a guide surfaces 176a, and an outlet port 180 formed adjacent an arch shaped guide surface 176b. The outlet port 180 communicates with the air preheater chamber 80 shown in FIG. 3 to supply compressed air to the combustor 18.

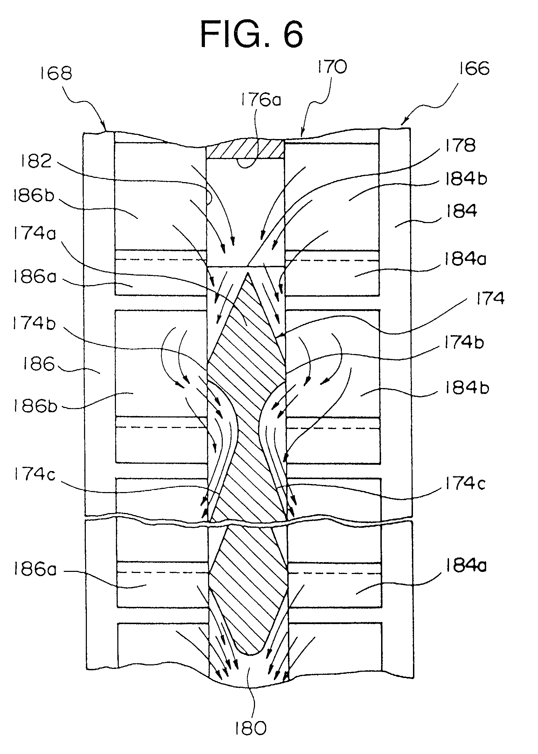

In FIGS. 4 and 6, the stator guide 174 extends between the intake port 178 and the outlet port 180 and includes a deflection guide 174a for deflecting air stream, which is sucked through an air filter (not shown) located at an upstream side of the intake port 178, toward the rotor discs 166, 168, a plurality of bucket opening and closing portions 174b, and a plurality of arch-shaped by-pass passages 174c. The rotor discs 166, 168 include an annular recess 182 in which the stator guide 174 is accommodated. The rotor discs 166, 168 includes fly-wheel discs 184, 186, and a plurality of circular arc shaped rotor blades 184a, 186a. The rotor blades 184a, 186a have concave areas which face in a rotational direction. During rotation of the rotor 170, axial ends of the rotor blades 184a, 186a periodically engages with the bucket opening and closing portions 174b to preclude reverse flow of compressed air. During rotation of the rotor 170, air supplied to the intake port 178 is delivered by the buckets 184a, 186a and transferred through the guide portion 174a to the rotor blades 184a, 186a in rear stages to be delivered to the blades in the rear stage via the by-pass passage 174c. In such a manner, air is compressed in a continuous manner and expelled from the outlet 180 under high pressure.

In the foregoing description, although the expander of the hydrogen engine has been exemplarily described as being composed of the turbine, the expander may take any other known structures such as the reciprocating engine and the rotary engine, etc.

While a specific embodiment of the invention has been described in detail, it will be appreciated by those skilled in the art that various modifications and alternatives to those details could be developed in light of the overall teachings of the disclosure. Accordingly, the particular arrangements disclosed are meant to be illustrative only and not limiting to the scope of the invention which is to be given the full breadth of the following claims and all equivalents thereof.

## Claims

1. A hydrogen engine comprising:
a compressed air supply section;
a water supply section;
a water/fuel converter for converting water into hydrogen rich gas and including an arc reactor chamber having an upstream side formed with a water inlet connected to the water supply section and a downstream side formed with at least one fuel injection nozzle, arc discharge electrodes disposed in the reactor chamber and a plurality of solid carbon electrode-elements located between the arc electrodes to form a large number of minute arc plasma passages among the solid carbon electrode-elements to allow a plurality of arc plasmas to be created therein;
an arc discharge power supply for supplying arc discharge electric power to the arc electrodes;
a combustor communicating with the fuel injection nozzle and the compressed air supply section for combusting a mixture of compressed air and the hydrogen rich gas to produce motive gas; and
an expander responsive to the motive gas to produce a mechanical output;
wherein water supplied at the upstream side of the arc reactor chamber is initially converted into steam and the steam then flows through the minute arc plasma passages to react with the plurality of solid carbon electrode bodies under the presence of arc plasmas to produce the hydrogen rich gas containing hydrogen, carbon monoxide and carbon dioxide.

2. The hydrogen engine according to claim 1, wherein the arc discharge electrodes include alternating current multi-phase electrodes, and the arc discharge power supply includes alternating current multi-phase power supply to periodically shift arc discharge areas in the arc reactor chamber.

3. The hydrogen engine according to claim 1 or 2, wherein the compressed air supply section includes a compressor driven by the expander, and the expander includes a turbine.

4. The hydrogen engine according to claim 1, 2 or 3, further comprising:
a condenser connected to the expander to cool expanded gas to obtain condensed water; and
a recycle line connected to the water supply section to recycle condensed water thereto.

5. The hydrogen engine according to claim 3, further comprising:
an engine housing having first, second and third zones for accommodating the water/fuel converter, the compressor and the turbine, respectively;
a compressed air supply passage interconnecting the compressor and the combustor to one another;
a jet stream passage interconnecting the combustor and the turbine; and
a water injection nozzle connected to the water supply section and the reactor chamber for injecting water into the upstream side thereof.

6. A power drive system comprising:
a hydrogen engine including a compressed air supply section, a water supply section, a water/fuel converter for converting water into hydrogen rich gas and including an arc reactor chamber having an upstream side formed with a water inlet connected to the water supply section and a downstream side formed with at least one fuel injection nozzle, arc discharge electrodes disposed in the reactor chamber and a plurality of solid carbon electrode-elements located between the arc electrodes to form a large number of minute arc plasma passages among the solid carbon electrode-elements to allow a plurality of arc plasmas to be created therein, an arc discharge power supply for supplying arc discharge electric power to the arc electrodes, a combustor communicating with the fuel injection nozzle and the compressed air supply section for combusting a mixture of compressed air and the hydrogen rich gas to produce motive gas, and an expander responsive to the motive gas to produce a mechanical output, wherein water supplied at the upstream side of the arc reactor chamber is initially converted into steam and the steam then flows through the minute arc plasma passages to react with the plurality of solid carbon electrode bodies under the presence of arc plasmas to produce the hydrogen rich gas containing hydrogen, carbon monoxide and carbon dioxide;
an alternating current electric power generator driven with the expander to produce AC power output;
a rectifier for converting the AC power output into a DC power output; and
an electric power storage unit for storing the DC power output;
wherein the arc discharge power supply is connected to the electric power storage unit to receive electric power therefrom.

7. A vehicle comprising:
a vehicle body;
a power drive system mounted in the vehicle body; and
a propulsion system driven with the power drive system to propel the vehicle body;
wherein the power drive system includes a hydrogen engine which includes: a compressed air supply section, a water supply section, a water/fuel converter for converting water into hydrogen rich gas and including an arc reactor chamber having an upstream side formed with a water inlet connected to the water supply section and a downstream side formed with at least one fuel injection nozzle, arc discharge electrodes disposed in the reactor chamber and a plurality of solid carbon electrode-elements located between the arc electrodes to form a large number of minute arc plasma passages among the solid carbon electrode-elements to allow a plurality of arc plasmas to be created therein, an arc discharge power supply for supplying arc discharge electric power to the arc electrodes, a combustor communicating with the fuel injection nozzle and the compressed air supply section for combusting a mixture of compressed air and the hydrogen rich gas to produce motive gas, and an expander responsive to the motive gas to produce a mechanical output to drive the propulsion system, wherein water supplied at the upstream side of the arc reactor chamber is initially converted into steam and the steam then flows through the minute arc plasma passages to react with the plurality of solid carbon electrode bodies under the presence of arc plasmas to produce the hydrogen rich gas containing hydrogen, carbon monoxide and carbon dioxide.

8. The vehicle according to claim 7, wherein the hydrogen engine further includes a condenser for condensing expanded gas to obtain condensed water and a recycle line for recycling the condensed water to the water supply line, and further comprising:
a radiator mounted at a front area of the vehicle body for cooling a coolant; and
a circulation pump for circulating the coolant between the radiator and the condenser.

9. The vehicle according to claim 7, further comprising
an alternating current electric power generator driven with the expander to produce AC power output;
a rectifier for converting the AC power output into a DC power output;
an electric power storage unit for storing the DC power output to supply electric power to the arc discharge power supply;
a power converter connected to the electric power storage unit and the rectifier; and
a motor/generator driven by a power output of the power converter to drive the propulsion system;
wherein, during deceleration of the vehicle, the motor/generator serves as an electric power generator to produce regenerative power output which is converted into DC power output by the power converter to be stored in the electric power storage unit.
